# EUROPÄISCHE PATENTSCHRIFT

(11) **EP 2 732 256 B1**
(45) Veröffentlichungstag und Bekanntmachung des Hinweises auf die Patenterteilung: **04.05.2016**
(21) Anmeldenummer: 12723684.2
(22) Anmeldetag: 25.05.2012
(51) Int. Cl.: G01K 7/42, H01F 27/40

(54) **NACHBILDUNG UND ANZEIGE DER WICKLUNGSTEMPERATUR EINES ELEKTRISCHEN LEISTUNGSTRANSFORMATORS**
REPRESENTING AND DISPLAYING THE COIL TEMPERATURE OF AN ELECTRICAL POWER TRANSFORMER
REPRODUIRE ET AFFICHER LA TEMPÉRATURE D'UN ENROULEMENT D'UN TRANSFORMATEUR

(30) Priorität: 14.07.2011 DE 102011107375
(43) Veröffentlichungstag der Anmeldung: 21.05.2014
(73) Patentinhaber: Maschinenfabrik Reinhausen GmbH, 93059 Regensburg (DE)
(72) Erfinder: HOLLUNDER, Sebastian, 61389 Schmitten-Niederreifenberg (DE); KUBICZEK, Martin, 65719 Hofheim (DE)
(86) Internationale Anmeldenummer: PCT/EP2012/059789
(87) Internationale Veröffentlichungsnummer: WO 2013/007435

(56) Entgegenhaltungen:
- AT-B- 378 623
- DE-B- 1 175 358
- DE-U1- 8 911 078

## Beschreibung

Die vorliegende Erfindung betrifft eine Einrichtung zur Nachbildung und Anzeige der Wicklungstemperatur eines elektrischen Leistungstransformators sowie eine dazu geeignete Begrenzungsschaltung.

Als Leistungstransformator bezeichnet man Transformatoren, die für hohe Leistungen in elektrischen Energienetzen ausgelegt sind. Diese Leistungstransformatoren unterliegen dabei teilweise starken physikalischen Belastungen, die beispielsweise auf zu hohe Lastströme zurückzuführen sind. Damit einhergehend kann es zu übermäßigen Alterungserscheinungen innerhalb des Leistungstransformators und damit zu Schädigungen kommen, die schwerwiegende Folgen für die Betriebssicherheit mit sich bringen. Aber nicht nur die Betriebssicherheit, sondern auch die Lebensdauer dieser teuren Investitionsgüter hängt maßgeblich von dem möglichst schonenden Betrieb jedes einzelnen Leistungstransformators ab. Eine Möglichkeit, um einen reibungsfreien Betrieb eines Leistungstransformators sicherzustellen ist es, die Wicklungstemperatur des Leistungstransformators zu überwachen.

Um die Wicklungstemperatur eines Leistungstransformtors nachzubilden und anzuzeigen, ist beispielsweise aus der DE 196 48 332 ein Verfahren bekannt geworden, beim dem die gemessene und angezeigte Temperatur aus der Temperatur des Kühlmittels zur Kühlung des Leistungstransformators und der Temperatur einer elektrischen Heizung gebildet wird, die ihrerseits wiederum mit einem der Belastung des Leistungstransformators proportionalen Strom versorgt wird. Zur Temperaturmessung wird ein Thermometer verwendet, das einen hohlen Messfühler, einen durch ein Kapillarrohr mit dem Messfühler verbundenen mechanischen Messwandler zur Betätigung einer mechanischen Anzeigevorrichtung und mehrere Schalter hat, wobei die miteinander verbundenen Hohlräume von Messfühler, Kapillarrohr und Messwandler einen geschlossenen Druckraum bilden, der mit einem Messmedium gefüllt ist, dessen Volumen sich in Abhängigkeit von der Temperatur ändert. Mit Hilfe des Messfühlers wird die Temperatur des Kühlmittels des Leistungstransformators unmittelbar gemessen und durch eine von der Messung der Temperatur des Kühlmittels getrennte, direkte Erwärmung des Messmediums mit Hilfe der in das Messmedium eingetauchten elektrischen Heizung wird ein der Wicklungstemperatur des Leistungstransformators entsprechender zusätzlicher Messdruck erzeugt.

Die elektrische Heizung ist in einer isolierten Heizkammer angeordnet, die vorzugsweise durch ein Kapillarrohr an den Druckraum von Messfühler und Messwandler angeschlossen ist.

Ein weiteres aus dem Stand der Technik bekanntes Verfahren, das sich mit der indirekten Messung der Wicklungstemperatur an Leistungstransformatoren beschäftigt, ist aus der DE 89 11 078 U1 bekannt. Bei diesem Verfahren ist in einer Tauchhülse für den Einbau in einen mit Flüssigkeit gefüllten Transformatorenkessel ein hohler Messfühler angeordnet, der von einem Isolierschlauch umgeben ist, der wiederum mit einem elektrischen Heizwiderstand umwickelt wird, der seinerseits von einem weiteren Isolierschlauch umhüllt ist. Mit Hilfe eines Stromwandlers wird ein der Belastung des Transformators proportionaler Strom, im nachfolgenden CT-Signalstrom genannt, über den Heizwiderstand geleitet, dessen Größe derart auf den Heizwiderstand und den Wärmedurchgang in Richtung des Messfühlers und Kühlmittels eingestellt ist, dass die von dem Messfühler gemessene Temperatur der jeweiligen mittleren oder maximalen Wicklungstemperatur des Leistungstransformators entspricht. Ein ähnliches System ist in der DE 1 175 358 beschrieben.

Der Tauchfühler wird dabei derart in dem Transformatorkessel eingebaut, dass die Tauchhülse in der Kühlflüssigkeit des Transformators eintaucht. Hierbei hängt die Temperaturdifferenz zwischen Transformatorwicklung und Kühlflüssigkeit vom jeweiligen Strom in dieser Wicklung ab. Dem Transformator ist daher ein Stromwandler zugeordnet, der den über den Transformator fließenden Strom als CT-Signalstrom erfasst. Der CT-Signalstrom dieses Stromwandlers ist nunmehr dem über den Transformator fließenden Strom proportional. Der genannte CT-Signalstrom fließt anschließend über einen Heizwiderstand, der dem Temperaturfühler zugeordnet ist und erzeugt dadurch einen der jeweiligen Transformatorenbelastung entsprechenden Anzeigeverlauf gegenüber der tatsächlich gemessenen Öltemperatur. Aufgrund einer vor der Inbetriebnahme vorgenommenen Kalibrierung kann man auf diese indirekte Weise eine Anzeige der mittleren oder maximalen Wicklungstemperatur bei gegebener Strombelastung des Leistungstransformators erhalten, d. h. die Anzeige eines dem beheizten Temperaturfühler nachgeschalteten Anzeigegeräts in ein thermisches Abbild der Vorgänge innerhalb des Leistungstransformators. Die Anzeige kann dann nach einer entsprechenden Verstärkung der Messsignale in einer mehr oder weniger weit entfernten Schaltwarte erfolgen. Es ist alternativ auch möglich, die betreffenden Messwerte in einer Steuer- und Regelanlage elektronisch weiter zu verarbeiten, beispielweise zu optischen und/oder akustischen Warnsignalen. All diese Auswerteschaltungen des CT-Signalstroms benötigen dabei allerdings eine separate Energieversorgung.

Diese Art der Nachbildung und Anzeige der Wicklungstemperatur eines elektrischen Leistungstransformators hat sich in der Praxis bewährt, hat jedoch den Nachteil, dass die Auswerteschaltungen, die den Strom eines CT-Signalstromkreises messen, bewerten, analysieren oder zur Anzeige bringen aus einer von dem CT-Signalstrom getrennten Quelle mit der für ihren Eigenbedarf benötigten Energie versorgt werden müssen. Hierfür ist es stets erforderlich, mindestens eine weitere versorgungsenergieführende Leitung, zusätzlich zu der Leitung des CT-Signalstromkreises zur Speisung des Heizwiderstandes, zu installieren sowie eine getrennte Energiequelle einzurichten. Im Umfeld hochspannungsführender Einrichtungen bedeutet dies allerdings nicht nur einen erheblichen Kostenaufwand, sondern auch zusätzliche Risiken hinsichtlich elektromagnetischer Beeinflussung des gespeisten Messgerätes. Diesen Risiken ist wiederum nur mit erheblichem sicherheitstechnischem Aufwand abzuhelfen.

Aufgabe der vorliegenden Erfindung ist es daher, eine Einrichtung zur Nachbildung und Anzeige der Wicklungstemperatur eines elektrischen Leistungstransformators anzugeben, die keine zusätzliche Energiequelle für die Versorgung der Messgeräte zur Auswertung des CT-Signalstroms benötigt.

Diese Aufgabe wird durch eine Einrichtung zur Nachbildung und Anzeige der Wicklungstemperatur eines elektrischen Leistungstransformators mit den Merkmalen des ersten Patentanspruches gelöst. Die Unteransprüche beziehen sich dabei auf besonders vorteilhafte Weiterbildungen der Erfindung.

Der vorliegenden Erfindung liegt dabei die allgemeine Idee zu Grunde, den CT- Signalstrom nicht nur für die Speisung beispielsweise des Heizwiderstandes eines Messfühlers zu benutzen, sondern dem CT-Signalstrom Energie transformatorisch über eine elektronische Begrenzungsschaltung auch für die Speisung der angeschlossenen Messgeräte auszukoppeln, so dass eine separate Energiequelle damit letztendlich entfallen kann. Dazu wird in den CT-Signalstrom die Primärwicklung eines Transformators, im nachfolgenden Entnahmetransformator genannt, eingefügt und die über die Primärwicklung und Sekundärwicklung des Entnahmetransformators abfallende Spannung begrenzt, indem ein über zwei parallel geschaltete Dioden ausgelöster Triac kurz schließt sobald die entsprechende Halbwelle einen Schwellenwert erreicht und erst wieder mit dem nächsten Stromnulldurchgang des CT-Signalstromes öffnet. Erfindungsgemäß sind damit keine zusätzlichen Leitungen oder Energiequellen mehr zur Speisung der Auswerteschaltung notwendig. Die Speisung der angeschlossenen Auswerteschaltung ist zudem vollkommen galvanisch von dem CT-Signalstrom getrennt. Das Risiko der Eintragung elektromagnetischer Störungen in die Auswerteschaltung ist damit deutlich verringert, was die Zuverlässigkeit und Langlebigkeit der verwendeten Komponenten steigert und damit die Kosten senkt.

Die Erfindung soll nachstehend an Hand von Figuren noch beispielhaft näher erläutert werden. Es zeigen
- Figur 1: eine aus dem Stand der Technik bekannte Einrichtung zur Nachbildung und Anzeige der Wicklungstemperatur eines elektrischen Leistungstransformators, wie in der DE 89 11 078 U1 beschrieben,
- Figur 2: eine erfindungsgemäße Einrichtung zur Nachbildung und Anzeige der Wicklungstemperatur eines elektrischen Leistungstransformators,
- Figur 3: eine zum Betrieb der erfindungsgemäßen Einrichtung besonders geeignete Begrenzungsschaltung.

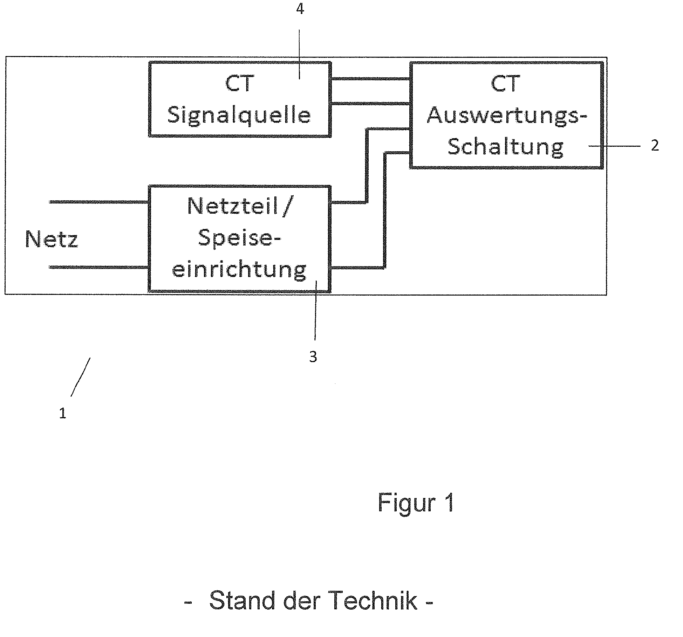

Figur 1 zeigt den schematischen Aufbau einer aus dem Stand der Technik bekannten Einrichtung 1, die zur Speisung einer CT- Signalstrom Auswerteschaltung 2 eine separate Energiequelle 3 benötigt. Eine derartige Einrichtung 1 ist beispielsweise aus der DE 89 11 078 U1 bekannt geworden. Bei der separaten Energiequelle 3 zur Speisung der Auswerteschaltung 2 kann es sich beispielsweise um ein Netzteil handeln. Weiterhin wird der zur Auswertung herangezogene eigentliche CT-Signalstrom beispielsweise in Form eines Stromwandlers, der dann als CT-Signalstromquelle 4 für die Auswerteschaltung 2 fungiert, abgegriffen. Der dem nicht dargestellten Transformator zugeordnete Stromwandler erfasst den über den Transformator fließenden Storm als CT-Signalstrom. Dieser CT- Signalstrom ist dem über den Transformator fließenden Strom proportional. Der CT- Signalstrom fließt anschließend über den Heizwiderstand des dem Temperaturfühler zugeordneten Messfühlers, der damit letztendlich indirekt einen zur Belastung des Transformators entsprechenden Anzeigeverlauf der tatsächlichen Öltemperatur anzeigt. Zusätzlich wird der über den Stromwandler abgegriffene CT-Signalstrom eben auch als CT-Signalquelle 4 herangezogen, um mittels der extern versorgten Auswerteschaltung 2 den Anzeigeverlauf der tatsächlichen Öltemperatur darzustellen.

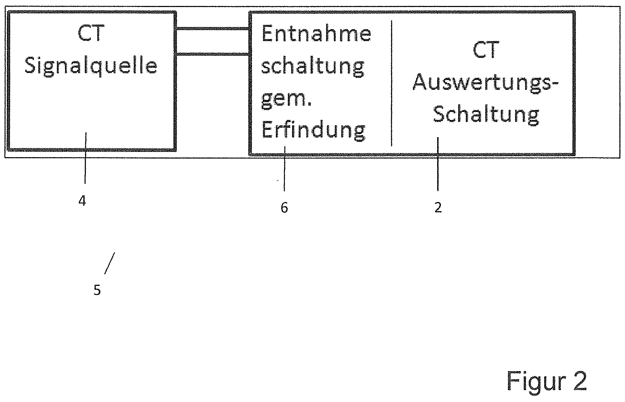

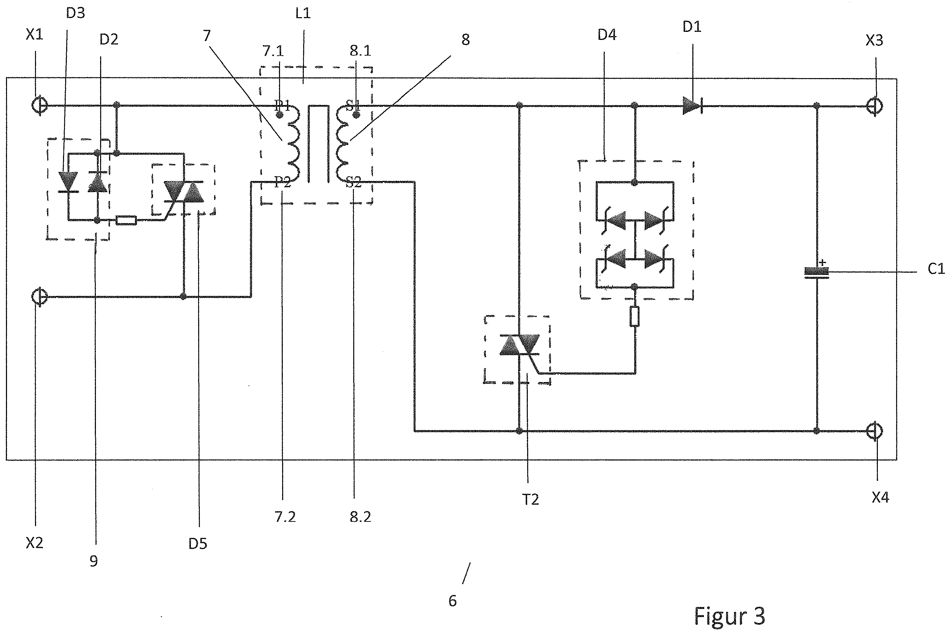

Figur 2 zeigt eine erfindungsgemäße Einrichtung 5, die zur Speisung einer CT- Signalstrom Auswerteschaltung 2 nicht, wie in Figur 1, über eine separate Energiequelle 3 energetisch versorgt werden muss, sondern mittels einer elektrischen Begrenzungsschaltung 6, die in Figur 3 näher beschrieben wird. Der Abgriff der CT-Signalstromquelle 4 kann auch hier beispielsweise über einen aus dem Stand der Technik bekannten Stromwandler erfolgen.

Fig. 3 zeigt den Aufbau der elektrischen Begrenzungsschaltung 6, die auf der einen Seite mit Klemmen X1 und X2 an der CT-Signalstromquelle 4 angeschlossen ist, während sie auf der anderen Seite mittels Klemmen X3 und X4 mit der eigentlichen Auswerteschaltung 2 elektrisch verbunden wird. Weiterhin ist ein Entnahmetransformator L1 mit einer Primärseite 7 und einer Sekundärseite 8 vorgesehen. Die Primärseite 7 weist dabei Anschlüsse 7.1 und 7.2 auf, wohingegen auf der Sekundärseite 8 Anschlüsse 8.1 und 8.2 vorgesehen sind. Der Entnahmetransformator L1 wird bei einem Anstieg des Stromes nach dem Nulldurchgang des CT-Signalstroms zunächst auf der Primärseite 7 stromdurchflossen und transformiert diesen Strom auf seine Sekundärseite 8. Die positive Halbwelle wird über eine zur Primärseite 7 in Reihe geschaltete Diode D1 einem Kondensator C1 zugeführt und lädt diesen energetisch auf. Übersteigt der Betrag der Spannung zwischen den Anschlüssen 8.1 und 8.2 den durch eine Z-Diodenanordnung D4 und die Gatespannung einer Zweirichterdiode T2 definierten Wert, so wird die Sekundärseite 8 des Entnahmetransformators L1 hierdurch kurzgeschlossen. Dadurch fällt auch der Spannungsabfall über die Primärseite 7 auf das durch den ohmschen Anteil der Primärimpedanz des Entnahmetransformators L1 sowie durch den Wert des CT-Signalstromes bestimmte Maß ab.

Dies hat zur Folge, dass die Energieentnahme bei der positiven Halbwelle auf die in die Ladung des Kondensators C1 abfließende Energie begrenzt ist. Bei der negativen Halbwelle wird keine Energie in die nachfolgende Auswerteschaltung 2 über die Klemmen X3 und X4 eingeleitet, was man durch Verwendung einer Gleichrichterbrücke bei Bedarf nachoptimieren kann. Übersteigt nun bei einem weiteren Anstieg des momentanen Stromes im Verlaufe der Sinuskurve des CT-Signalstromes durch den ohmschen Anteil der Primärseite 7 des Entnahmetransformators L1 die darüber abfallende Spannung einen bestimmten Wert, so wird der Entnahmetransformator L1 dadurch an seiner Primärseite 7 kurzgeschlossen. Diese Spannung wird durch die Durchbruchsspannung von zwei in die Gatestrecke des Triac D5 eingefügte antiparallele Dioden D2 und D3 sowie die Gatespannung einer mit den beiden Dioden D2 und D3 elektrisch verbundenen Triac D5 bestimmt. Mit anderen Worten: Der Triac D5 schließt die Primärseite 7 des Entnahmetransformators L1 genau dann kurz, wenn der Betrag des Stromes durch sein Gate die Auslöseschwelle überschritten hat. Dies ist dann der Fall, wenn die Spannung zwischen X1 und X2 betragsmäßig die Summe der Durchbruchsspannung der Diode D3 (positive Halbwelle) bzw D2 (negative Halbwelle) plus der Gateschwellspannung des Triacs D5 übersteigt.

## Patentansprüche

1. Einrichtung zur Nachbildung und Anzeige der Wicklungstemperatur eines elektrischen Leistungstransformators,
wobei ein Stromwandler (4) an einer Wicklung des Leistungstransformators angeordnet ist, derart, dass dieser den über eine Wicklung des Leistungstransformators fließenden Strom als CT-Signalstrom abgreift,
wobei der Ausgang des Stromwandlers mit einem innerhalb einer Tauchhülse angeordnetem Heizelement elektrisch in Verbindung steht, derart, dass das Heizelement mit dem CT- Signalstrom beaufschlagbar ist,
wobei innerhalb der Tauchhülse weiterhin ein Messfühler angeordnet ist, der mit einer Auswerteschaltung (2), die zur Anzeige der Messwerte ausgebildet ist, elektrisch in Verbindung steht, derart, dass dadurch ein Abbild der thermischen Wärmeverhältnisse des Leistungstransformators innerhalb der hermetisch abgeschlossen Tauchhülse erzeugbar ist, das mittels der Auswerteschaltung (2) anzeigbar ist, **dadurch gekennzeichnet, dass** die Tauchhülse ölgefullt ist, und das die Energieversorgung der Auswerteschaltung (2) durch eine, in die elektrische Verbindung des Stromwandlers zur Auswerteschaltung (2) eingeschleifte, elektrische Begrenzungsschaltung (6) erfolgt, die die für die Auswerteschaltung erforderliche elektrische Energie ebenfalls vom Stromwandler abgreift.

2. Einrichtung nach Anspruch 1, **dadurch gekennzeichnet, dass** die elektrische Begrenzungsschaltung (6) an den Stromwandler (4) elektrisch anschließbare Klemmen (X1 und X2) und an die Auswerteschaltung (2) elektrisch anschließbare Klemmen (X3 und X4) aufweist, dass die Begrenzungsschaltung (6) einen mit einer Primärseite (7) und einer Sekundärseite (8) ausgestatteten Entnahmetransformator (L1) aufweist, wobei auf der Primärseite (7) Anschlüsse (7.1 und 7.2) und auf der Sekundärseite (8) Anschlüsse (8.1 und 8.2) vorgesehen sind, dass mit der Primärseite (7) des Entnahmetransformators (L1) antiparallel angeordnete Dioden (D2 und D3) und ein Triac (D5) elektrisch in Verbindung stehen, und dass mit der Sekundärseite (8) eine Diode (D1), ein Kondensator (C1) eine Zweirichterdiode (T2) und eine Z-Diodenanordnung (D4) elektrisch in Verbindung stehen.

## Claims

1. Device for representing and displaying the coil temperature of an electrical power transformer,
wherein a current converter is so arranged at a coil of the power transformer that this taps off the current, which is flowing across a coil of the power transformer, as a CT signal current,
wherein the output of the current converter is so electrically connected with a heating element arranged within an oil-filled immersion sleeve that the heating element can be acted on by the CT signal current,
wherein additionally arranged within the oil-filled immersion sleeve is a measuring sensor which is so electrically connected with an evaluating circuit (2) constructed for displaying the measurement values that an image of the thermal heat relationships of the power transformer within the hermetically closed immersion sleeve can thereby be produced, which image can be displayed by means of the evaluating circuit (2),
and wherein the energy supply of the evaluating circuit (2) takes place by an electrical limitation circuit which is connected into the electrical connection of the power converter with the evaluating circuit (2) and which equally taps off from the current converter the electrical energy required for the evaluating circuit.

2. Device according to claim 1, **characterised in that** the electrical limitation circuit (6) has terminals (X1 and X2) electrically connectible with the CT signal current source (4) and terminals (X3 and X4) electrically connectible with the evaluating circuit (2), that the limitation circuit (6) comprises a tapping transformer (L1) equipped with a primary side (7) and a secondary side (8), wherein connections (7.1 and 7.2) are provided on the primary side (7) and connections (8.1 and 8.2) are provided on the secondary side, that diodes (D2 and D3) in anti-parallel arrangement and a triac (D5) are electrically connected with the primary side (7) of the tapping transformer (L1) and that a capacitor (C1), a bidirectional diode (T2) and a Z-diode arrangement (D4) are electrically connected with the secondary side (8).

## Revendications

1. Dispositif permettant de reproduire et d'afficher la température d'un enroulement d'un transformateur de puissance électrique dans lequel un convertisseur de courant (4) est monté sur un enroulement du transformateur de puissance de sorte qu'il puisse saisir le courant passant dans un enroulement du transformateur de puissance, sous la forme d'un courant de signaux CT,
la sortie du convertisseur de courant est électriquement reliée à un élément chauffant monté à la partie interne d'un manchon plongeur de sorte que le courant de signaux CT puisse être fourni à cet élément chauffant,
à la partie interne du manchon plongeur est en outre monté un détecteur de mesure en liaison électrique avec un circuit d'exploitation (2) réalisé pour permettre d'afficher les valeurs de mesure de sorte que l'on puisse ainsi obtenir une image des propriétés thermiques du transformateur de puissance à la partie interne du manchon plongeur qui est hermétiquement fermé, pouvant être affichée au moyen du circuit d'exploitation (2),
**caractérisé en ce que**
le manchon plongeur est rempli d'huile et l'alimentation en énergie du circuit d'exploitation (2) est effectuée par un circuit de limiteur électrique (6) bouclé dans la liaison électrique du convertisseur de courant avec le circuit d'exploitation (2), et qui capte également à partir du convertisseur de courant, l'énergie électrique nécessaire pour le circuit d'exploitation.

2. Dispositif conforme à la revendication 1,
**caractérisé en ce que**
le circuit limiteur électrique (6) comporte des prises (X1 et X2) pouvant être connectées électriquement au convertisseur de courant (4) et des prises (X3 et X4) pouvant être connectées électriquement au circuit d'exploitation (2),
le circuit limiteur (6) comprend un transformateur de prélèvement (L1) équipé d'un côté primaire (7) et d'un côté secondaire (8), des bornes de connexion (7.1 et 7.2) étant prévues sur le côté primaire (7) et des bornes de connexion (8.1 et 8.2) étant prévues sur le côté secondaire (8),
un triac (D5) et des diodes (D2 et D3) montées en antiparallèle sont en liaison électrique avec le côté primaire (7) du transformateur de prélèvement (L1), et
une diode (D1), un condensateur (C1), une diode bidirectionnelle (T2) et un montage de diodes zener (D4) sont en liaison électrique avec le côté secondaire (8).
